**Europäisches Patentamt**

**European Patent Office**

**Office européen des brevets**

(19)

(11) Veröffentlichungsnummer : **0 460 388 B1**

(12) **EUROPÄISCHE PATENTSCHRIFT**

(45) Veröffentlichungstag der Patentschrift :
**03.08.94 Patentblatt 94/31**

(51) Int. Cl.⁵ : **B01D 53/36,** C01B 17/79,
B01J 23/22

(21) Anmeldenummer : **91106428.5**

(22) Anmeldetag : **22.04.91**

(54) **Katalysator für die Oxidation von Schwefeldioxid.**

(30) Priorität : **08.06.90 DE 4018324**

(43) Veröffentlichungstag der Anmeldung :
**11.12.91 Patentblatt 91/50**

(45) Bekanntmachung des Hinweises auf die
Patenterteilung :
**03.08.94 Patentblatt 94/31**

(84) Benannte Vertragsstaaten :
**DE FR GB IT SE**

(56) Entgegenhaltungen :
**EP-A- 0 264 747**
**EP-A- 0 336 882**
**EP-A- 0 385 958**
**DE-A- 1 086 218**
**FR-A- 2 263 817**

(73) Patentinhaber : **Degussa Aktiengesellschaft**
**Weissfrauenstrasse 9**
**D-60311 Frankfurt (DE)**

(72) Erfinder : **Blumrich, Stephan**
**Hanauer Strasse 16**
**W-6052 Mühlheim 2 (DE)**
Erfinder : **Honnen, Wolfgang, Dr**
**Weingartshalde 12/1**
**W-7408 Kusterdingen-Jettenburg (DE)**
Erfinder : **Engler, Bernd, Dr.**
**Treuener Strasse 2**
**W-6450 Hanau 9 (DE)**
Erfinder : **Koberstein, Edgar, Dr.**
**Wolfskernstrasse 8**
**W-8755 Alzenau (DE)**

## Beschreibung

Die Erfindung betrifft einen Katalysator für die Oxidation von in einem sauerstoffhaltigen Gasstrom enthaltenem Schwefeldioxid, enthaltend die Komponenten

$A_1$)　　　Vanadiumoxid und

$A_2$)　　　Alkalimetalloxid und/oder -sulfat als katalytisch aktive Substanzen und

B)　　　Silicium und/oder Aluminium in Form von Oxiden als oberflächenvergrößernde Komponente.

Eine Quelle der bestehenden Umweltverschmutzung sind neben dem Straßenverkehr auch die Abgase aus Verbrennungsprozessen und Industrieanlagen. Die hauptsächlich in den Abgasen enthaltenen Luftschadstoffe Stickoxide, Kohlenmonoxid, Kohlenwasserstoffe und Schwefeldioxid sind hinlänglich wegen ihrer umweltbelastenden Wirkung bekannt.

Wenn Primärmaßnahmen zur Verminderung der Schadstoffemissionen nur geringe Wirkung auf die Gesamtschadstoffemission haben, müssen Sekundärmaßnahmen, wie z. B. katalytische Abgasreinigungsverfahren eingesetzt werden.

Ein großer Teil der Verbrennungsprozesse für fossile Brennstoffe geschieht bei überstöchiometrischen Brennstoff-Luft-Zusammensetzungen. Die dafür geeigneten katalytischen Abgasreinigungsverfahren sind das hinreichend bekannte SCR-Verfahren zur Entstickung mittels Ammoniak und der Einsatz von edelmetallhaltigen Oxidationskatalysatoren zur Oxidation von Kohlenmonoxid, Kohlenwasserstoffen und auch dem Schwefeldioxid, welches sich zu Schwefelsäure weiterverarbeiten läßt. Eine Kombination aus beiden Verfahren stellt das in der DE-C- 36 01 378 beschriebene Verfahren dar, mit dem Abgase unter Gewinnung von Schwefelsäure von $NO_x$ und $SO_2$ befreit werden können.

Aus produktionstechnischen Gründen sind edelmetallhaltige Oxidationskatalysatoren in Monolithform noch nicht in den an sich notwendigen großen geometrischen Abmessungen erhältlich. Es ist bislang noch erforderlich, einzelne kleinere Monolithe übereinander anzuordnen, um das notwendige Katalysatorvolumen zu erhalten. Da sich aus staubbeladenen Abgasen an den Stößen zwischen aneinandergrenzenden Monolithen Staub festsetzt, müssen aufwendige Staubbläser in großer Anzahl installiert werden. Daneben stellt insbesondere die Edelmetallkomponente dieser Katalysatoren einen erheblichen Kostenfaktor dar, der bei kleineren Abgasreinigungsanlagen zwar toleriert werden kann, bei größeren Anlagen, wie Heizkraftwerken oder Großkraftwerden aber zu prohibitiven Investitionskosten führt. Schließlich ist die katalytisch aktive Edelmetallkomponente besonders empfindlich gegenüber in Rauchgas vorhandenen Giftkomponenten, welche eine Desaktivierung des Katalysators verursachen.

Wie schon ausgeführt, geschieht die Sauberhaltung von Katalysatoren in staubbeladenen Abgasen durch sog. Ruß-oder Staubbläser, die den auf der Anströmseite der Katalysatoren und an den Stößen von Katalysatorpaketen abgelagerten Staub vermittels Heißdampf oder Heißluft aufwirbeln, ihn dadurch dem Abgasstrom wieder zuführen, durch die Katalysatorkanäle hindurch mitreißen und so aus dem Reaktor entfernen. Um die Anzahl kostenintensiver Rußblaseeinrichtungen in einem katalytischen Reaktor gering zu halten, ist es zwingend notwendig, möglichst wenige Anströmflächen und Stöße in einem solchen mit Monolith- bzw. Wabenkatalysatoren bestückten Reaktor zu haben. Voraussetzung dazu ist, daß die verwendeten Monolith- bzw. Wabenkörper mit einer möglichst großen Stücklänge hergestellt werden können. Diese Vorgabe ist aber eben bei den edelmetallhaltigen Beschlchtungskatalysatoren noch nicht realisierbar.

Auch funktioniert die Verwendung von Ruß- oder Staubbläsern nur bei Katalysatoren in Monolith- bzw. Wabenform. Katalysatoren in Schüttgutform können damit nicht abgereinigt werden, da der Staub nur in tiefere Stellen der Katalysatorschüttung Vordringen würde, die Verstopfung aber bestehen bliebe. Gleichzeitig bestünde hier die Gefahr einer unkontrollierten Verwirbelung des Schüttgutkatalysators.

Die bislang zur Überführung von Schwefeldioxid in Schwefeltrioxid, dem Anhydrid der Schwefelsäure, im sog. Kontaktverfahren eingesetzten Edelmetallkatalysatoren (z. B. Platin) oder besonders Nichtedelmetalloxidkatalysatoren (z. B. Vanadinpentoxid und Alkalisulfat mit Siliciumdioxid als Trägermaterial wie sie zum Beispiel in der DE-A- 10 86 218 beschrieben werden) sind indes ausschließlich in Schüttgutform (als Strangpreßlinge oder Ringe) verwendet worden. Aus den vorstehend erläuterten Gründen war diese Technologie für die Behandlung schwefeloxidhaltiger Abgase, insbesondere wenn sie staubbeladen waren, problematisch. Staubablagerungen mußten durch Absieben des Katalysators entfernt werden. Die Lebensdauer solcher Katalysatoren wurde daher hauptsächlich durch die mechanische Festigkeit bestimmt.

Die EP-A-0 264 747 offenbart Katalysatoren für die Oxidation von O-Xylol zu Phthalsäureanhydrid, die Vanadium Pentoxid und Titanoxid sowie einen Oxidations-promotor aus der Gruppe Kalium, Rubidlum, Cäsium, Bor und Phosphor enthalten. Wesentlich bei diesen Katalysatoren ist, daß Titanoxid in der Rutilform vorliegt. Anteile von Titanoxid in der Anatasform sind in den Katalysatoren unerwünscht, da sie sich vermutlich nachteilig auf die Oxidationsreaktion auswirken. Die Katalysatoren werden als kalziniertes Pulver eingesetzt.

Der Erfindung liegt die Aufgabe zugrunde, einen Katalysator zu schaffen, der geeignet ist, in beliebigen sauerstoffhaltigen bzw. mit Sauerstoff oder einem sauerstoffhaltigen Gas versetzten Gasströmen enthaltenes Schwefeldioxid in Schwefeltrioxid zu überführen. Er sollte als Schüttbett-geeigneter Formkörper zur Behandlung staubfreier Gasströme und als monolithischer bzw. wabenförmiger Körper für die Verwendung in druckverlustempfindlichen Abgas- und Rauchgasreinigungsanlagen und/oder bei staubhaltigen Luft-, Abgas- oder Rauchgasströmen eingesetzt werden können, leicht in jede für Schüttgutkatalysatoren übliche Form gebracht und als Monolith bzw. Wabenkörper gefertigt werden können. Dazu wurde eine Formulierung entwickelt, die von derjenigen der bisher zu dem erfindungsrelevanten Zweck benutzten Katalysatoren abweicht. Letztgenannte Katalysatoren weisen nämlich als Schüttkörper keine ausreichende Abriebfestigkeit auf oder ließen sich nur unbefriedigend zu Wabenkörpern mit ausreichender Festigkeit verarbeiten.

Gegenstand der Erfindung ist ein Katalysator für die Oxidation von in einem sauerstoffhaltigen Gasstrom enthaltenem Schwefeldioxid, enthaltend die Komponenten

$A_1$)        Vanadiumoxid und

$A_2$)        Alkalimetalloxid und/oder -sulfat als katalytisch aktive Substanzen und

B)        Silicium und/oder Aluminium in Form von Oxiden als oberflächenvergrößernde Komponente.

Der Katalysator ist dadurch gekennzeichnet, daß er noch

C)        Titanoxid in Anatas- und/oder Rutilform als Trägermaterial und keramischer Binder

enthält und daß er als Vollkatalysator, gegebenenfalls in Monolith- bzw. Wabenform ausgebildet ist, in welchem ein Gemisch der Komponenten A) - C) bei Atomverhältnissen zwischen den Metallen der Komponenten gemäß $A_1$) : $A_2$) : B) : C) = (0,01 - 0,2) : (0,01 - 0,2): (0,001 - 0,5) : 1, vorzugsweise (0,02 - 0,08) : (0,02 - 0,08) : (0,005 - 0,05) : 1 in feinteilig versinterter Form vorliegt.

Der erfindungsgemäße Oxidationskatalysator wird in dem bezeichneten Anwendungsgebiet folgenden Forderungen gerecht:

Er vermag Schwefeldioxid zu mehr als 90 % in einem einzigen Verfahrensschritt in Schwefeltrioxid zu überführen.

Er ist in Form von Monolith- bzw. Wabenkörpern bis zu einer Länge von 1000 mm herstellbar und wird den erläuterten Anforderungen an die Sauberhaltung bei Beaufschlagung mit staubhaltigem Gas vollständig gerecht. Der Temperaturbereich, in dem der erforderliche Umsatz erbracht wird, ist, besonderes zu niedrigen Temperaturen hin, sehr breit. Das kinetische Verhalten des Katalysators ist erheblich verbessert, denn an den bisher meist eingesetzten edelmetallhaltigen Katalysatoren verläuft die Oxidationsreaktion nicht wie hier nach einem Zeitgesetz erster Ordnung, woraus sich Probleme bei der Bemessung des notwendigen Katalysatorvolumens vor allem bei hohen Umsatzforderungen ergeben können. Der Katalysator ist ein sog. Vollkatalysator, d. h. er enthält durch und durch katalytisch aktives Material, was durch Abrieb mittels z. B. in Rauchgasen enthaltenem Staub immer wieder freigelegt wird.

Ein weiterer Gegenstand der Erfindung besteht in einem Verfahren zur Herstellung des Katalysators. Das Verfahren ist dadurch gekennzeichnet, daß man die Komponenten A) - C) in feinteiliger Form unter Zusatz der für eine Verpressung bzw. Extrusion keramischer Massen üblichen Zusatzstoffe Befeuchtungsmittel, Stützstoff, Grünkörperbindemittel, Verformungshilfsmittel und gegebenenfalls Porenbildner, intensiv zu einer homogenen Masse verarbeitet, die Masse zu den gewünschten Grünkörpern, vorzugsweise den Monolith- bzw. Wabengrünkörpern verpreßt oder extrudiert, die Grünkörper unter langsamer Temperaturerhöhung bis höchstens 60°C bei kontrollierter Feuchte der Umgebungsluft trocknet und sie dann unter stufenweiser Erhöhung der Temperatur in Umgebungsluft auf mindestens 500 und höchstens 800° C kalziniert und bei einer Temperatur in diesem Bereich mindestens 12, vorzugsweise 14 - 48, insbesondere 18 - 36 Stunden sintert.

Als Befeuchtungsmittel können entsalztes Wasser, wäßrige Ammoniak-Lösung, Monoethanolamin und Alkohole eingesetzt werden.

Als Stützstoffe können z. B. Glasfasern verschiedener Größe Verwendung finden.

Als Bindemittel, welche der herzustellenden Paste nach der Verformung im Zustand des sog. Grünkörpern genügende Stabilität verleihen, sind Zellulosederivate, wie Carboximethylzellulose oder auch unsubstituierte Zellulosen geeignet.

Außerdem kommen Polyethylen, Polypropylen, Polyvinylalkohol, Polyethylenoxid, Polyacrylamid oder Polystyrol als Bindemittel zum Einsatz.

Um ein Verpressen zu erleichtern oder die Extrusionsfähigkeit zu verbessern, werden Verformungs- und/oder Gleit-Hilfsmittel, wie Bentonite, Tonerden, organische Säuren, Paraffin, Wachse, Silikonöle, zugesetzt.

Schließlich kann auch die Porosität (Porenvolumen, Porenverteilung) der erfindungsgemäßen Vollkatalysatoren gezielt durch Zusatz geeigneter Porenbildner eingestellt werden. Solche Substanzen sind z. B. feinteilige Kohlen (Aktivkohlen) oder Holzschliff, welche bei den anzuwendenden Kalziniertemperaturen ausbrennen.

Zum intensiven Vermischen der Ausgangsstoffe zu einer homogenen Knetmasse können mit Vorteil Knet-

EP 0 460 388 B1

aggregate verwendet werden. Dabei werden Kneter mit sigmaförmigen oder scherend aus streichenden Schaufeln bevorzugt. Das Verfahren ist sehr einfach. Es werden technisch aufwendige, umweltbelastende und daher auch teure Verfahrensschritte vermieden. Kopräzipitations- und Mahlvorgänge zur Darstellung eines innigen Oxidgemisches entfallen. Dies führt zu einer deutlichen Verbilligung der Produktion und beseitigt gleichzeitig die Abhängigkeit von aufwendig hergestellten Ausgangsmaterialien.

Ein besonderer Vorteil des beschriebenen Herstellungsverfahrens beruht darin, daß als Ausgangsstoffe ausnahmslos im Handel erhältliche Oxide bzw. chemisch temperaturstabile Sulfate verwendet werden und damit ein Einsatz von Hydroxid- oder Oxidhydratvorstufen, welche zusätzliche Verarbeitungsmaßnahmen bedingen würden, entfallen kann.

Im Gegensatz zu häufig verwendeten, Titanoxid enthaltenden Entstickungskatalysatoren, in denen dieser Komponente eine katalytische Wirkung beigemessen wird, übernimmt diese Verbindung in dem erfindungsgemäßen Katalysator für die Oxidation von Schwefeldioxid als Komponente C) ausschließlich die Funktion eines keramischen Tägers und Bindemittels für die katalytisch aktive Substanz A) und ihren oberflächenvergrößernden Zusatz B).

Das als obligatorischer Anteil der katalytisch aktiven Substanz A) verwendete Alkalimetalloxid oder -sulfat $A_2$ übernimmt in der erfindungsgemäßen Katalysatorzusammensetzung die Funktion eines Flußmittels für die aktive Substanz $A_1$) bei der Betriebstemperatur von 380 - 500° C. $A_1$) und $A_2$) wiederum fördern den Sintervorgang zwischen dem Bindemittel C) und und dem oberflächenvergrößernden Zusatz B) bei der Versinterung der Einsatzstoffe für den Katalysator.

Ein weiterer Gegenstand der Erfindung ist die Verwendung des erfindungsgemäßen Katalysators zur Oxidation von in einem Luftstrom oder einem Sauerstoff enthaltendem Abgas oder Rauchgasstrom vorliegendem Schwefeldioxid.

Beispiel 1

In einem Knetaggregat mit Sigma-Schaufeln werden folgende Substanzen vermischt und einem Knetprozess von 7 h Dauer unterzogen:

| Titanoxid (Anatas) | 4950 g |
| Siliciumdioxid | 146 g |
| Vanadiumpentoxid | 297 g |
| Kaliumsulfat | 297 g |
| Wasser | 4542 g |
| Ton | 213 g |
| Glasfasern | 550 g |
| organische Zuschlagstoffe | 164 g |
| Ammoniak | 1150 g |

Die Knetmasse wird anschließend auf einem Schneckenextruder zu Formkörpern extrudiert, bei einem Temperaturanstieg von 1° C pro Stunde und bei einer relativen Feuchtigkeit von ca. 100 bis 80 % auf 50° C erhitzt, dabei weitgehend getrocknet und dann in Schritten von maximal 50° C pro 2 Stunden auf 600° C weitererhitzt. Anschließend wird zur Sinterung für 24 Stunden bei dieser Temperatur an der Luft getempert. Die Wabenkörper haben 3 x 3 Zellen quadratischen Querschnitts, eine Zellweite von 5,5 mm und eine Wandstärke von 1,3 mm.

Der Aktivitätstest wurde in einer Labortestanlage unter folgenden Bedingungen vorgenommen:

4

| $\dot{V}$ | 1,13 | $m^3/h$ i.N. feucht |
|-----------|------|---------------------|
| AV[*) | 16-52 | m/h |
| LV[**) | 0,6 | m/s i.N. |
| T | 350-450 | °C |
| NO | 100 | ppm trocken |
| $SO_2$ | 600 | ppm tr. |
| $O_2$ | 5 | Vol.% tr. |
| $H_2O$ | 7 | Vol.% f. |
| $N_2$ | Rest | |

*) Flächenbelastung (Volumenstrom/Katalysatorfläche)

**) Anströmgeschwindigkeit

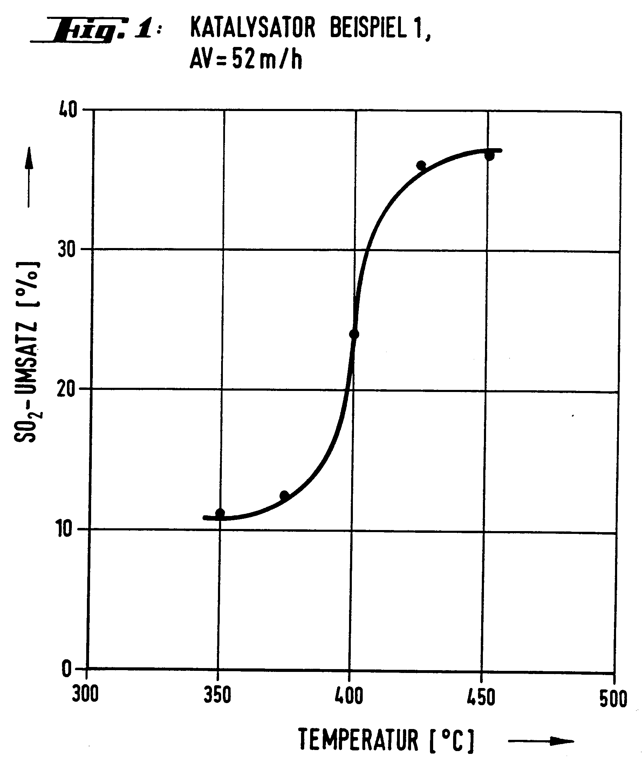

Figur 1 zeigt die Temperaturabhingigkeit der Katalysatoraktivität dieses Katalysators bei einer Flächenbelastung AV = 52 m/h, welche einer Raumgeschwindigkeit von ca. 20000 h⁻¹ entspricht. Bis 375° C bleibt der Umsatz auf niedrigerem Niveau, steigt aber dann in einem Temperaturfenster von 50° C Breite steil an und stabilisiert sich ab ca. 425° C bei 36 - 37 %.

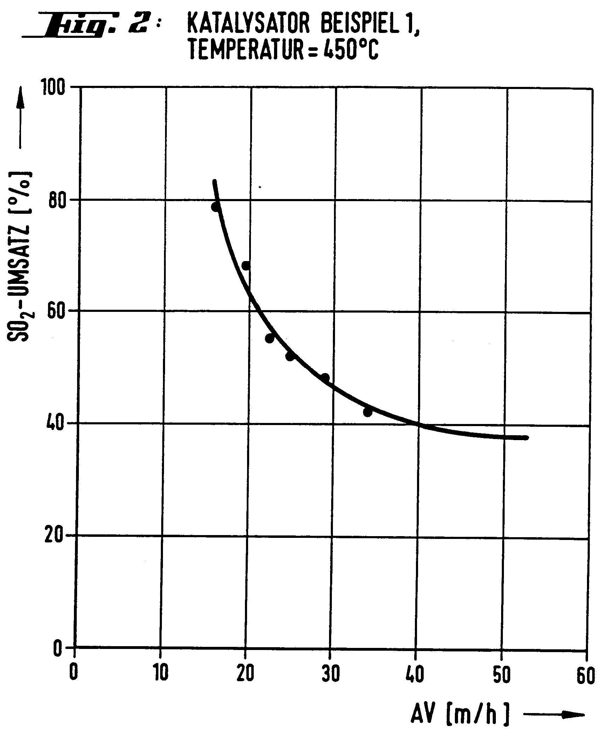

Figur 2 zeigt die Abhängigkeit des $SO_2$-Umsatzes von der Flächenbelastung des Katalysators. Der AV-Wert betrug zunächst 16,4 m/h bei einer 350 mm langen Katalysatorwabe. Durch Absägen um jeweils 30 mm wurde der AV-Wert sukzessive auf 52 m/h erhöht. Der für den realen Betrieb interessante AV-Bereich zwischen 4 und 10 m/h kann zwar in dieser Labortestanlage nicht eingestellt werden, jedoch wurden schon ab AV = 15 m/h Umsatzwerte um 80 % gefunden, so daß zu erwarten ist, daß in dem Bereich Umsatzwerte über 90 % erreicht und sogar deutlich überschritten werden.

Beispiele 2 - 6

In einem Knetaggregat mit scherend aus streichenden Schaufeln werden folgende Substanzen vermischt und 12 h zu einer Paste verknetet (alle Angaben in kg):

5

| Beispiel<br><br>Komponente | 2 | 3 | 4 | 5 | 6 |
|---|---|---|---|---|---|
| Titanoxid (Anatas) | 30,0 | 180,0 | 180,0 | 40,0 | 40,0 |
| Siliciumdioxid | 0,9 | 2,7 | 2,7 | 1,2 | 1,2 |
| Ammoniummetavanadat | 1,0 | 6,0 | 12,0 | 2,66 | 2,66 |
| Kaliumsulfat | 1,5 | 9,0 | 9,0 | 2,0 | 3,0 |
| Wasser | 16,5 | 100,0 | 100,0 | 20,5 | 20,0 |
| Ton | 1,5 | 9,0 | 9,0 | 2,0 | 2,0 |
| Glasfasern | 3,18 | 19,0 | 19,0 | 4,23 | 4,23 |
| organische Zuschlagstoffe | 1,235 | 7,5 | 7,5 | 2,0 | 2,0 |

Die Paste wird nach der Knetung in einen Extruder gegeben und zu Wabenkörpern verpreßt. Bei den Beispielen 2, 5 und 6 wurden sog. Viertelmonolithe à 75 x 75 mm Breite und 500 mm Länge extrudiert, bei den Beispielen 3 und 4 Vollmonolithe à 150 x 150 mm Breite und 1000 mm Länge. Nach Trocknung und Calzinierung wie im Beispiel 1 erfolgten Prüfungen einerseits an einer Pilotanlage nach einer Steinkohle-Trockenfeuerung und andererseits in einer großtechnischen Anlage ebenfalls nach einer Steinkohle-Trockenfeuerung. Die Zusammensetzung der Rauchgase in den beiden Anlagen entsprechen im Rahmen des üblichen Schwankungsbereiches der in Beispiel 1 angegebenen Zusammensetzung mit dem Unterschied, daß noch ca. 12 Vol.% $CO_2$ und ein Staubgehalt von < 50 mg/m³ vorlag.

Für die Pilotanlage werden die Rauchgase nach der Entstaubung isokinetisch abgezogen und mittels Elektroerhitzer auf die gewünschte Temperatur aufgeheizt. Die Katalysatoren befinden sich in einem wärmeisolierten Reaktor, der insgesamt über 12 Gasprobenentnahme- und Temperaturmeßstellen verfügt. Gemäß dem DESONOX®-Verfahren der Anmelderin werden die Rauchgase zunächst nach der SCR-Methode (selektive katalytische Reduktion) entstickt. Direkt nach den Katalysatoren zur Reduktion der Stickoxide mit $NH_3$ wurden die erfindungsgemäßen Oxidationskatalysatoren installiert. Die nach dem erfindungsgemäßen Verfahren in Längen zu 1000 mm bzw. 500 mm mit Seitenkantenlängen von 150 mm x 150 mm bzw. 75 mm x 75 mm produzierten Elemente wurden aus Gründen einer Detailvermessung der Umsetzung entlang der Reaktionsstrecke der Pilotanlage in Elemente mit einer Länge von je 150 mm zersägt. Insgesamt wurden acht derartige Elemente hintereinander eingebaut. Die Zellteilung betrug 4,2 mm.

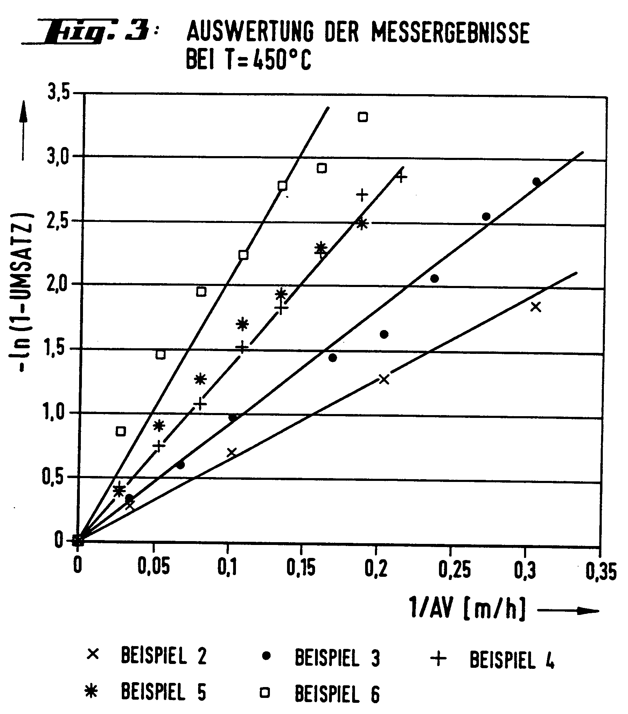

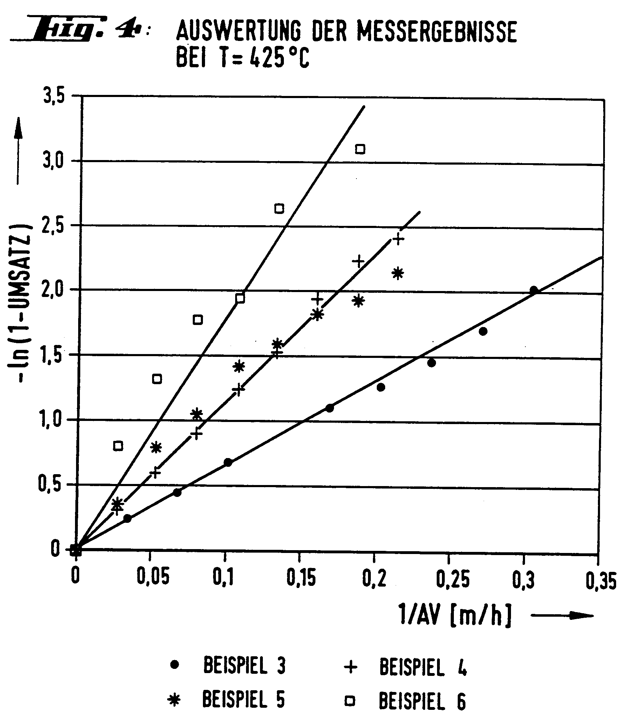

Die Figuren 3 und 4 zeigen die Auswertung der Meßergebnisse an Proben aus ausgewählten Beispielen bei 450 bzw. 425° C, wobei im Sinne einer Reaktion erster Ordnung die Auftragung -ln (1-n) gegen 1/AV gewählt wurde. Der Ordinatenwert von 2,3 entspricht einem Umsatz von 90 %.

Die dabei gefundenen Ergebnisse zeigen, daß $SO_2$-Konversionen zu $SO_3$ > 90 % problemlos erreicht werden können, daß die beim Edelmetallkatalysator notwendige Fixierung auf eine Mindesttemperatur von 450° C nicht mehr notwendig ist und daß die Kinetik der $SO_2$-Oxidation näherungsweise einem Zeitgesetz erster Ordnung gehorcht.

Die in der großtechnischen Anlage eingesetzten Probestücke wurden nach einer Laufzeit von mehr als 1000 Betriebsstunden entnommen und in die beschriebene Pilotanlage zur Aktivitätsbestimmung eingebaut. Es konnten keine Aktivitätsminderungen festgestellt werden.

Beispiele 7 - 10

In einem Knetaggregat mit ausstreichenden Schaufeln werden folgende Substanzen vermischt und einer Knetprozedur von 5 h Dauer unterzogen (alle Angaben in g):

EP 0 460 388 B1

| Beispiel<br>Komponente | 7 | 8 | 9 | 10 |
|---|---|---|---|---|
| Titanoxid (pyrogen) | 667 | " | " | " |
| Siliciumdioxid (pyrogen) | 70 | " | " | " |
| Ammoniummetavanadat | 37,1 | " | " | " |
| Kaliumsulfat | 20,2 | 40,4 | 0 | 32,3 |
| Cäsiumsulfat | 20,2 | 0 | 40,4 | 8,1 |
| Wasser | 260 | " | " | " |
| Ton | 25,3 | " | " | " |
| Glasfasern | 72,4 | " | " | " |
| übliche organische Zuschlagstoffe, einschließlich Carboxymethyl-cellulose | 15,7 | " | " | " |
| Ammoniak | 30 | " | " | " |

Nach der Knetung wird die erhaltene Paste zu Strangpresslingen verarbeitet. Die Trocknung und Calzinierung erfolgte wieder gemäß Beispiel 1, hier jedoch bei einer Endtemperatur der Trocknung von 60° C und einer Endfeuchtigkeit von 70 % relativer Feuchte. Die Temperatur beim Calzinieren wurde hier nur auf 500°C gesteigert und dann wurde 48 h bei dieser Temperatur gesintert.

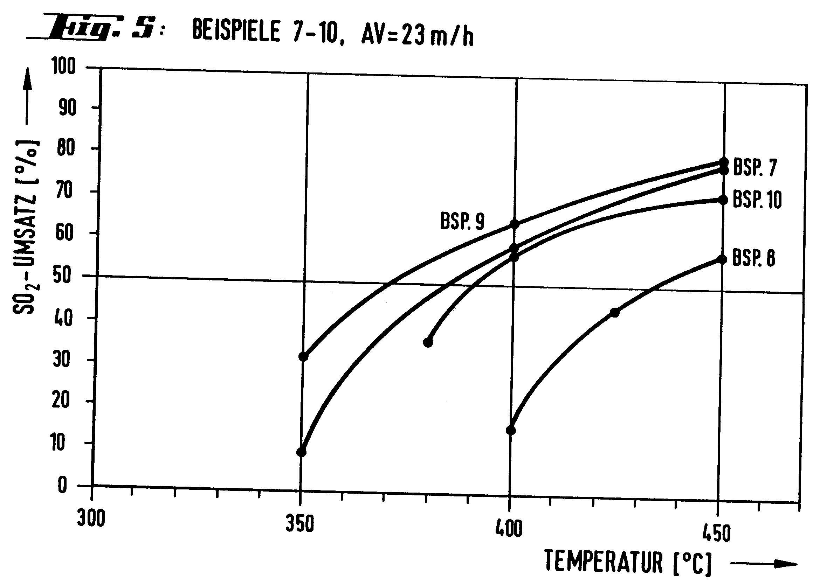

Figur 5 zeigt das temperaturabhängige Aktivitätsverhalten der so hergestellten Katalysatoren unter den in Beispiel 1 genannten Prüfbedingungen.

Beispiele 11 - 15

In einem Knetaggregat mit scherend aus streichenden Schaufeln werden folgende Substanzen vermischt und einer Knetprozess von 5 h Dauer unterzogen (alle Angaben in g):

7

| Beispiel<br><br>Komponente | 11 | 12 | 13 | 14 | 15 |
|---|---|---|---|---|---|
| Titanoxid<br>(80 Gew.% Anatas +<br>20 Gew.% Rutil) | 700 | 700 | 770 | 470 | 700 |
| Siliciumdioxid<br>(Fällungskieselsäure) | 70 | 70 | 2 | 300 | |
| Aluminumoxid<br>($\gamma$-Al$_2$O$_3$) | | | | | 70 |
| Vanadiumpentoxid | 7,5 | 130 | 42 | 42 | 42 |
| Kaliumsulfat | 160,0 | 10 | 42 | 42 | 42 |
| Wasser | 300 | 250 | 220 | 300 | 300 |
| Ton | 30 | 25 | 25 | 25 | 25 |
| Glasfasern | 73 | 73 | 73 | 73 | 73 |
| organische<br>Zuschlagstoffe<br>einschließlich<br>Carboxymethylcellulose | 17 | 17 | 17 | 17 | 17 |
| Ammoniak | 50 | 50 | 50 | 50 | 50 |

Die Herstellung der Beispiele 11 - 14 geschah in Anlehnung an Beispiel 1. Die hergestellten Katalysatoren deckten die für die Konzentrationsbereiche der Komponenten $A_1$, $A_2$, B und C beanspruchten Eckwerte ab. Es zeigte sich, daß sich alle Herstellungsmaßnahmen des Verfahrensanspruchs, wie der Knetvorgang, die Extrusion, die Trocknung, die Calzinierung und die Sinterung unproblematisch in diesem Rahmen durchführen lassen. Es werden in jedem Fall mechanisch stabile Formkörper von angemessener katalytischer Aktivität erhalten.

Beispiel 11 ergab, daß ein solcherart zusammengesetzter Katalysator eine besonders hohe Aktivität schon bei niedrigen Temperaturen hat.

Beispiel 15 ergab, daß die Mitverwendung von Al$_2$O$_3$ ebenfalls erhöhte Aktivität erbringt.

**Patentansprüche**

1.  Katalysator für die Oxidation von in einem sauerstoffhaltigen Gasstrom enthaltenem Schwefeldioxid, enthaltend die Komponenten

    $A_1$)        Vanadiumoxid und

    $A_2$)        Alkalimetalloxid und/oder -sulfat als katalytisch aktive Substanzen und

    B)        Silicium und/oder Aluminium in Form von Oxiden als oberflächenvergrößernde Komponente,

    **dadurch gekennzeichnet,**

    daß der Katalysator noch

    C)        Titanoxid in Anatas- und/oder Rutilform als Trägermaterial und keramischer Binder

    enthält und daß er als Vollkatalysator, gegebenenfalls in Monolith- bzw. Wabenform ausgebildet ist, in welchem ein Gemisch der Komponenten A) - C) bei Atomverhältnissen zwischen den Metallen der Komponenten gemäß $A_1$) : $A_2$) : B) : C) = (0,01 - 0,2) : (0,01 - 0,2) : (0,001-0,5) : 1, vorzugsweise (0,02 - 0,08) : (0,02 - 0,08) : (0,005 - 0,05) : 1 in feinteilig versinterter Form vorliegt.

2.  Verfahren zur Herstellung des Katalysators nach Anspruch 1,

**EP 0 460 388 B1**

**dadurch gekennzeichnet,**

daß man die Komponenten A) - C) in feinteiliger Form unter Zusatz der für eine Verpressung bzw. Extrusion keramischer Massen üblichen Zusatzstoffe Befeuchtungsmittel, Stützstoff, Grünkörperbindemittel, Verformungshilfsmittel und gegebenenfalls Porenbildner, intensiv zu einer homogenen Masse verarbeitet, die Masse zu den gewünschten Grünkörpern, vorzugsweise den Monolith- bzw. Wabengrünkörpern verpreßt oder extrudiert, die Grünkörper unter langsamer Temperaturerhöhung bis höchstens 60° C bei kontrollierter Feuchte der Umgebungsluft trocknet und sie dann unter stufenweiser Erhöhung der Temperatur in Umgebungsluft auf mindestens 500 und höchstens 800° C kalziniert und bei einer Temperatur in diesem Bereich mindestens 12, vorzugsweise 14 - 48, insbesondere 18 - 36 Stunden sintert.

3. Verwendung des Katalysators gemäß Anspruch 1 oder 2 zur Oxidation von in einem Luftstrom oder einem Sauerstoff enthaltenden Abgas- oder Rauchgasstrom vorliegendem Schwefeldioxid.

## Claims

1. A catalyst for the oxidation of sulfur dioxide present in an oxygen-containing gas stream, containing the following components:

   $A_1$)      vanadium oxide and

   $A_2$)      alkali metal oxide and/or sulfate as catalytically active substances and

   B)      silicon and/or aluminium in the form of oxides as surface-enlarging component,

   characterized in that it also contains

   C)      titanium dioxide in anatase and/or rutile form as support material and ceramic binders

   and in that it is in the form of a solid catalyst, optionally in monolith or honeycomb form, in which a mixture of components A) to C) is present in finely sintered form with atomic ratios between the metals of components $A_1$) : $A_2$) : B) : C) of (0.01 - 0.2) : (0.01 - 0.2) : (0.001 - 0.5) : 1 and preferably (0.02 - 0.08) : (0.02 - 0.08) : (0.005 - 0.05) : 1.

2. A process for the production of the catalyst, characterized in that components A) to C) in finely divided form are intensively processed with the additives typically used for the press-molding or extrusion of ceramic compositions, including moistening agents, support materials, green-body binders, molding aids and, optionally, pore-forming agents, to form a homogeneous paste, the paste is press-molded or extruded to the desired green bodies, preferably the green monoliths or honeycombs, the green bodies are dried with a slow increase in temperature to at most 60°C in ambient air of controlled moisture content, subsequently calcined with a step-by-step increase in the temperature of the ambient air to at least 500°C and at most 800°C and are sintered at that temperature for at least 12 hours, preferably for 14 to 48 hours and more preferably for 18 to 36 hours.

3. The use of the catalyst claimed in claim 1 or 2 for the oxidation of sulfur dioxide present in an air stream or an oxygen-containing waste gas or smoke stream.

## Revendications

1. Catalyseur pour l'oxydation d'anhydride sulfureux contenu dans un courant gazeux contenant de l'oxygène comprenant les composants :

   $A_1$)      oxyde de vanadium et

   $A_2$)      oxyde et/ou sulfate de métal alcalin en tant que substances catalytiquement actives et

   B)      Silicium et/ou aluminium sous forme d'oxydes, en tant que composants augmentant la superficie, caractérisé en ce que le catalyseur contient encore

   C)      de l'oxyde de titane sous forme d'anatase et/ou de rutile, en tant que matériau de support et de liant céramique et en ce que, en tant que catalyseur massif, il a éventuellement une structure monolithique ou en nid d'abeilles, dans lequel est présent, sous forme frittée finement divisée, un mélange des composants A) C) à rapports atomiques entre les métaux des composants selon $A_1$) : $A_2$ : B) : C) = (0,01 - 0,2) : (0,01 - 02) : (0,001 - 0,5) : 1 de préférence (0,02 - 0,08) : (0,02 - 0,08) : (0,005 - 0,05) : 1.

2. Procédé pour la préparation du catalyseur selon la revendication 1, caractérisé en ce que l'on transforme

**9**

en une masse homogène, par mélange énergique, les composants A) - C) sous forme finement divisée, avec addition des additifs, utilisés habituellement pour une compression ou extrusion de matières céramiques, humidifiant, agent de soutien, liant pour corps cru, adjuvant de mise en forme et éventuellement agent à création de pores, on comprime ou extrude la masse en des corps crus recherchés, de préférence en des corps crus monolithiques ou en nid d'abeilles, on sèche les corps crus en élevant lentement la température jusqu'à 60°C au maximum en présence d'un taux réglé d'humidité de l'air ambiant, et on la calcine ensuite en élevant progressivement la température, dans l'air ambiant, jusqu'à au moins 500°C et au plus 800°C, et on la soumet à un frittage à une température dans cette plage pendant au moins 12, de préférence 14 - 48, en particulier 18 - 36 heures.

3. Utilisation du catalyseur selon la revendication 1 ou 2, pour l'oxydation d'anhydride sulfureux présent dans un courant d'air ou dans un courant de gaz d'échappement ou de gaz de combustion contenant de l'oxygène.

Fig. 1: KATALYSATOR BEISPIEL 1,
AV = 52 m/h

Fig. 2: KATALYSATOR BEISPIEL 1,
TEMPERATUR = 450°C

**Fig. 3:** AUSWERTUNG DER MESSERGEBNISSE BEI T=450°C

× BEISPIEL 2 • BEISPIEL 3 + BEISPIEL 4

\* BEISPIEL 5 □ BEISPIEL 6

**Fig. 4:** AUSWERTUNG DER MESSERGEBNISSE BEI T = 425°C

• BEISPIEL 3    + BEISPIEL 4

∗ BEISPIEL 5    □ BEISPIEL 6

**Fig. 5:** BEISPIELE 7-10, AV=23 m/h

BSP. 7
BSP. 10
BSP. 8
BSP. 9

SO$_2$-UMSATZ [%]

TEMPERATUR [°C]

300   350   400   450

0  10  20  30  40  50  60  70  80  90  100